Europäisches Patentamt

European Patent Office

Office européen des brevets

(11) Publication number: **0 086 542**
**A1**

(12) **EUROPEAN PATENT APPLICATION**

(21) Application number: **83200220.8**

(22) Date of filing: **11.02.83**

(51) Int. Cl.³: **G 11 B 23/02**

(30) Priority: **12.02.82 NL 8200540**
**25.08.82 NL 8203328**

(43) Date of publication of application: **24.08.83**
**Bulletin 83/34**

(84) Designated Contracting States: **AT BE CH DE FR GB IT LI LU NL SE**

(71) Applicant: **Ragchunath Participatie B.V., Schipholcentrum 7672, NL-1118 ZK Schiphol (NL)**

(72) Inventor: **Laan, Dirk, c/o Schipholcentrum 7672, NL-1118 ZK Schiphol (NL)**

(74) Representative: **Rhijnsburger, Johan Gerard, 's-Gravenbroekseweg 32, NL-2811 GE Reeuwijk (NL)**

(54) **Book storage system.**

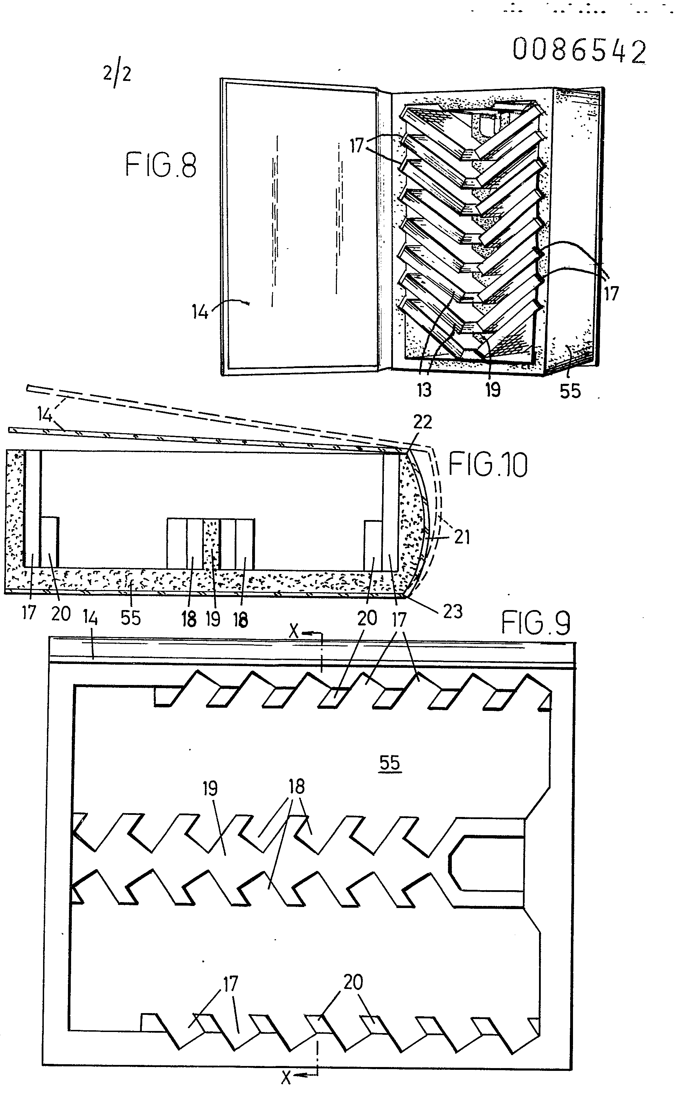

(57) Storage system in book form for cassettes containing a core (50, 51, 52, 53, 54, 55) of foamed material with dense pores substantially without internal tensions, which is mainly attached to one side of the book and contains compartments (7, 71, 72, 73, 74, 75) arranged by complementary recesses (17, 18) in the core, wherein the cassettes are insertable, preferably in an inclined position in respect of the book. Fig. 8 shows a representative embodiment.

EP 0 086 542 A1

Ragchunath Participatie B.V.

Schiphol-Amsterdam

The Netherlands.

— / —

0086542

## Book storage system.

The invention relates to a storage system in book form, in particular applicable for sound and video articles, like cassettes provided with a core with compartments. Such a storage device, a.o. in the shape of a suit-case, is known wherein the core is attached to both sides of the book binding by two separate halves. Compartments are arranged in the core wherein e.g. cassettes in their flat form can be inserted.

Such a storage has the disadvantage that the core during the course of time looses its coherence and the keepability of the package, which is exposed to changing temperatures and moisture conditions, such as e.g. during transport, is not as good as would be desirable. Especially cores which are made by a deformation process, such as deep drawing or compression moulding, have the tendency after some time to warp or be otherwise deformed, making the package unsuitable. Furthermore, these systems are not as handsome in use as would be desirable and the available space is not esthetically optimally utilised.

The invention now provides such a system wherein the package has a long life and wherein the articles to be stored, in particular sound· and video cassettes, are protected against temperature and moisture exposures as well as against dust.

Thus the system according to the invention is thereby characterized in that in the book binding a core is present which substantially is attached at one side of the book binding and which is provided with
preferably
compartments wherein the articles occupy an inclined position when the book stands upright. Preferably the core is also attached to the back of the book.

The core preferably is made by moulding or casting of a mouldable or shapeable substance or a mixture in a mould as a consequence of which it substantially does not contain internal stresses which in the end would deform .the core. The core preferably consists of foamed rigid plastics, such as polyurethane, polystyrene and other foamable plastics, preferably with closed pores.

Such materials for example have densities of 20-40 kg/m$^3$, especially about 30 kg/m$^3$.

The core preferably is attached to one of the sides of the book binding and preferably to the back by either mechanical or other means, such as by adhesive means. The attachment may be effected by a pressure button system, a number of perforations being made into the side of the book wherein press buttons are fitting which engage in corresponding openings in the core. Another way is by means of a screw system whereby screws can be inserted into the said openings.

Also other mechanical systems can be used such as hooks and eyes, so that the core as it were is fixed in a hanging position. The core further can be glued over the total lateral edge. This offers the advantage that the core over the total breadth of the binding can be uniformly attached which favours the coherence and avoids protruding parts. The back can also, if desired, be uniformly and adequately fixed. One can also apply combinations of the various attachment techniques. The general condition of the bindersystem is that the core is uniformly attached over the total breadth of the edge.

The book bindings may possess any conventional shape and be made of materials used for bindings like e.g. paper, cloth and board. Also plastic material with suitable properties may be used for this purpose. It is to be understood that the expert can select the right materials with the desired properties, like mechanical strength, stiffness and light weight.

As already mentioned the conventional shape of a book is maintained in its generality so that the storage system as such can be easily taken up in a book array or put into empty spaces. For cassettes dimensions for the booksystem of the order of the A4 size have been found very advantageous.

It is an additonal advantage of the said booksystem that one book binding is free and available for texts and other signs of any kind. Advertisements as well as slogans or personal signs when the book is handled as a present can be inserted. The free book binding can be integral with the book or be present as a loosebinding which by means of removable or detachable attachments, like press and draw attachments, by means of fittingly deformable extrusions and perforations on the binding and core may be attached or detached.

Codes can be put on the back of the book etc. to classify the types of articles packaged. In an advantageous embodiment use is made of exchangeable titels or codes which for example by means of imprint systems may be placed and again removed, if necessary. Imprint systems with a number of titles are suitably supplied with the bookpackage. The core may consist of any material which is resistant against temperature and moisture, which is stiff and does not show internal stresses which could diminish the coherence of the core.

The core, as already mentioned, preferably consists of a rigid plastic foam of the type with dense pores such as styrene, polyvinyl and polyurethane. This results in the advantage that a firm coherent structure is made which is suitably attachable to the binding of the book as well as shows favourable isolation properties and has a relatively light weight. The articles are protected as well by the buffer action of the core against impacts etc. while also temperature and moisture variations as well as dust cannot exert disadvantageous effects. Furthermore, the foam plastic possesses enough friction and compressability that the articles do not easily shift in their position.

The core of the rigid plastic foam may possibly be coated with soft plastic which is in foamed condition or not. The core is preferably substantially uniform with the binding when packaging cassettes and similar articles. The core will preferably also be provided with upright edges along its circumference which contain perforations needed to insert and retain the cassettes. In the central part material has been removed with the exception of reinforcing edges with reduced height.

In a preferred embodiment the core occupies the complete internal breadth of the book binding with an internal recess and a reduced central reinforcing edge, especially when using cassettes, which thus partly extend from the compartments and thus can be easily inserted and withdrawn.

The compartments and the cassettes are preferably arranged in an inclined position i.e. with an inclination in the surface of the book binding as well as in another embodiment perpendicular thereon. Both inclinations may be present at the same time. The compartments are adapted to the shape and dimensions of the articles to be packaged. The compartments do not fully extend through the bottom of the core since the core preferably comprises its total bottom surface to give sufficient stiffness. Thereby also the attachment to the book binding by gluing etc. is more uniform and stronger as well as the isolation better.

For sound cassettes it is preferred to apply two rows of compartments in a pair there being arranged between therows a reinforcing edge, for instance in the shape of a fish bone to further reinforce the core. The core may be attached substantially over the total surface of the book, which is preferred but also over a part therof; there being fixed a complementary part on the free binding, if necessary. Further variations are possible according to the invention such as open spaces between core parts. Such variations may be of importance when packing dissimilar articles which however belong together.

In a preferred embodiment the compartments give an inclination to the articles in the surface of the binding. The inclination is of the order of 30-50, especially 45$^{o}$ for cassettes and may as well run from the centre upwards as downwards but preferably from the middle upwards, seen in the upright position of the book.

In another embodiment the compartments of the book are aligned preferably horizontally in the upright position of the book but they give an inclination to the articles away from the binding. In this embodiment as well centrally a reinforcing edge is present, with suitable perforations for the cassettes. Video cassettes are preferably inserted in one row in this design, in numbers of say 2 to 8 per book.

The core is accessible by opening the book at one side whereafter the articles may be stored or taken away, as the case may be. The free binding may be made removeable f.i. by means of projections or recesses which fit in corresponding recesses respectively projections of the core. The free binding may comprise along its circumference upright edges which as it were form part of the core, especially at the side edges and which are abutting on the edges of the core when the book is closed.

In this embodiment the back may also be made flat. The pivoting point of the free binding preferably lies on the core, but the free binding may also be rotatable about the bottom of the core, in which case the back of the book is free i.e. that there is no attachment between the back and the core.

The system may further be adapted to two or more distinct articles, such as cassettes with an appropriate present-article or articles which belong together such as bottles or flasks which display the flat shape of cassettes and which may contain alcoholic liquors or perfumes etc., with appropriate attributes like glasses or vaporizers. Preferably the core is provided with rounded off edges at the outside thereof.

The invention will now be illustrated by means of the following figures wherein

figure 1 is a book in a perspective view,

figure 2 is the opened book,

figure 3 is a lateral section of a cassette storage system with a row of 6 cassettes,

figure 4 is a similar section of a videoband storage system with 5 cassettes,

figure 5 shows an open book with therein inserted two cassettes in horizontal compartments,

figure 6 shows an open book with inclined cassettes,

figure 7 shows an open book with inclined cassettes.

figure 8 shows a further embodiment of figure 7,

figure 9 finally shows a plan of a book without a cover, and figure 10 is a cross section along the line 1x-1x of figure 9.

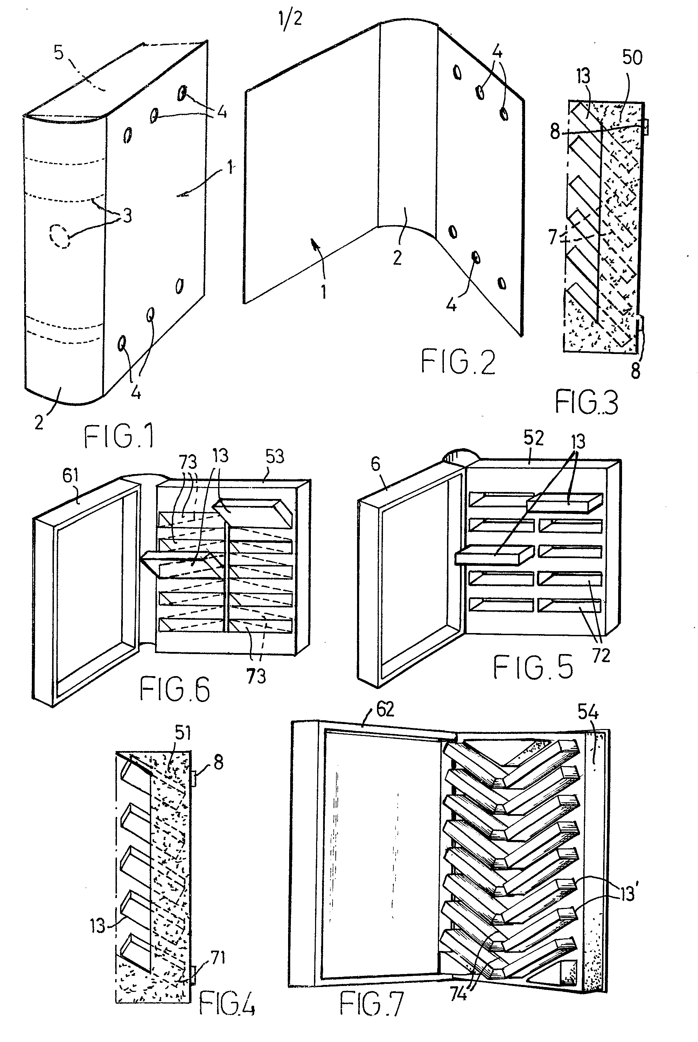

In figure 1, 1 is the book binding, 2 the back provided with possible marks or codes 3, wherein at one side openings 4 are visible for possible mechanical attachment of the core.

In figure 2 the inner side of the book without a core is shown.

In figure 3 the compartment lines 7 indicate schematically in what way the cassettes are placed in the core. This core 50 comprises the total depth of the binding of the book, wherein at 8 the places of engagement of the mechanical attachments are shown. The angle of inclination herein is about 45$^{\circ}$.

In figure 4 the same system is illustrated but now for larger videotapes. The inclination is here smaller than 45$^{\circ}$. The core is indicated by 51 and adapted to this type of storage system with compartments 71.

In figure 5 a storage system according to the invention in open condition is shown. In the core 52 two rows of compartments 72 are present. wherein the cassettes 13 are inserted of which two are shown. The core 52 does not comprise the total depth of the book. On the free binding an edge 6 is placed which in closed position of the book exactly fits on the edge of the core 52.

Edge 6 is hingeable around line 9', the extreme edge of the core, the back thereby suitably being made of deformable elastic material or like a bellows.

Figure 6 shows a similar system wherein the cassettes 13 are inserted in an inclined position in compartments 73 in core 53, which comprises part of the thickness of the book and in closed position fits on the edge 61. The back is not glued to the core and the free binding is rotatable about the vertical lines starting at 10 as well as 9.

In figure 7 an embodiment of the invention is illustrated wherein the cassettes 13· are inclined towards the centre of the core 54 at an in compartments 74 angle of about 45°. At the side of the book (14) a sign can be applied, such as the trade mark SBS, Sound Book System, or an advertisement or any other text. Also in this embodiment the core does not cover the whole depth of the book and a protruding edge 62 is fixed on the free binding.

In figure 8 a modification of figure 7 is shown, which is preferred. 13 55 Herein the cassettes are totally lying in the edge of the core and 19 they extend only in relation to the central reinforcing edge. The free binding 14 here forms a flat cover.

Figure 9 is a plan view of a book according to figure 8 with the free binding in upright position.

Core 55 includes . upright edges which comprise the total depth of the book, wherein at the two sides recesses 17 are located which cooperate with recesses 18 in the reinforcing edge 19, centrally in the core. The fishbone structure of the reinforcing edge is clearly visible. Recesses 17 and 18 form compartments wherein the cassettes are fitting. The height of the reinforcing edge 19 is about 1/3-1/2 of the depth, though this is not critical, it only being necessary that there is sufficient room for the cassettes to be manually taken out and inserted in an easy manner. The recesses 17 extend over the total depth of the edge. Furthermore parts 20 are made into the edge which additionally serve to fix the cassettes.

In figure 10 further is indicated that the back 21 is fixed to the book and the binding rotates about the point 22 or that it is free and also rotates about point 23. In the last case the back 21 may be omitted and made as a flat part against the corresponding part of the core.

The rotating point 22 may be maintained so that actually ⋅ two rotation points are present.

The invention has been in particular described for cassettes but it is also applicable to analogous or similar articles for which there ex ists a need for such a package.

In order to understand more clearly the invention the meanings of several expressions are defined.

Under "core" of the book the structure in the internal part of the book is meant wherein the articles can be stored which structure is a part of the book and may be separated thereof. This core preferably substantially consists of a rigid foamed plastic such as polyurethane or polystyrene, with preferably closed pores which have light weight, possess isolating properties and have enough mechanical strength to keep the book intact. From the core preferably large parts are taken away to decrease its weight, improve the view and make the cassettes better handable. Preferably the core consists of a box i.e. that is contains upright edges with lowered central reinforcing edges between which the compartments for containing the articles are arranged. The core therefor comprises recesses which in combination with the reinforcing edge (i.e. the recesses thereof) define the circumference of the compartments for storing the articles.

Under "compartments" one understands spaces in the core fixed by the recesses wherein the articles fittingly can be inserted. It is not necessary that the compartments are fully surrounded by core material. It suffices that in the edges of the core and in the central reinforcing edge, when double rows are used suitable recesses are present. The recesses of the edge possess an extra lip at the bottom part, preferably of the same height as the reinforcing edge and in line therewith to further sufficiently fix the articles. In the edges the recesses preferably comprise the total depth of the book. The central recesses are preferably of the same height as the reinforcing edge, wherein they are made, and amount usually 1/3 to 1/2 of the depth of the book, which limits however are not critical. As a consequence of the fact that the foamed core is slightly deformable the articles can be inserted with a slight friction so that when handling the book and opening thereof, the articles, especially the cassettes, do not drop out.

By "inclination" is meant that the compartments with the articles inserted in upright position of the book make an angle with the horizontal surface. The compartments with the articles therein may be inclined in two directions, such as indicated in respectively figures 5, 6 and 7. Possibly both inclinations may be present. The inclined shape gives a better view of the articles packaged.

The storage system may be taken up in libraries or book collections or independently stored, forming an esthetic appearance. The outer parts of the bindings can be provided with codes for classification or retrieval, for which preprinted films or strips with appropriate indications are especially suited.

The core may be made from several materials with different colours to reach a contrasting colour effect. The core material may as well comprise coloured granulates or be coated with coloured layers partly or totally. Also it can be flocked with flocks with one or more colours for a decorative effect.

The core need not comprise the total surface of the book or its depth. The compartments need not be identical but they may differ, e.g. for packaging different articles. The free binding may be removably attached or if fixed also be attachable additionally by press buttons or similar press attachments.

The core may also be made of other materials than plastics,e.g.wood treated in kmown ways to increase its resistance against environmental influences.

0086542

CLAIMS

1.    Storage system in bookform, in particular for sound and video articles like cassettes, characterized in that in the book binding (1) a core (50, 51, 52, 53, 54, 55) is present, which core is mainly attached to one side of the book binding (1) and is provided with such compartments (7, 71, 72, 73, 74) that the articles (13) therein are fixed with their narrow sides towards the binding (1) of the book.

2.    Storage system according to claim 1, wherein the articles (13) in upright position of the book have an inclined position.

3.    Storage system according to claims 1-2, wherein the core is also partly or totally fixed to the back (2) of the book.

4.    Storage system according to claims 1-3, wherein the core consists of an inert material and is processed in a die by pouring, injection moulding or other moulding processes such that it does not substantially contain internal tensions.

5.    Storage system according to claims 1-4, wherein the core consists of a foamed material with preferably dense pores.

6.    Storage system according to claims 1-5, wherein the core is fixed substantially over the total book binding (1) and is substantially uniform therewith.

7.    Storage system according to claims 1-6, wherein the core has an open structure with a continuous bottom and recesses (17) for the compartments are made into the side edges.

8.    Storage system according to claims 1-7, wherein the core contains two or more series of compartments, preferably vertical series in upright position of the book, which are separated by reinforcing edges (19), whrein complementary recesses (18) for the compartments are present, which may have an inclination in respect of the plane of the book and/or perpendicular thereof.

9.    Storage system according to claims 1-8, wherein the core comprises part of the thickness of the book and is fitting to a complementary part (6, 61,62) of the other side of the book binding.

10.    Storage system according to claims 1-9, wherein the core only occupies part of the space of the closed book or is interrupted.

11.    Storage system according to claims 1-10, wherein the compartments have different sizes.

0086542

FIG.1

FIG.2

FIG.3

FIG.6

FIG.5

FIG.4

FIG.7

FIG.8

14

17

13    19    55

14

22

FIG.10

21

17  20  14  55    18 19 18    20 17    23    FIG.9

X

55

19    18

17    20

X

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | | | G 11 B   23/02 |
| Y | US-A-4 289 235   (R.A.EGLY) <br> *Column  3,  line 54 to column 7, line 15; figures* | 1-11 | |
| Y | US-A-4 002 355   (B.T.SENDOR) <br> *Column  2,  line  9 to column 3, line 22; figures* | 1-11 | |
| A | US-A-3 604 556   (L.E.SCHWARTZ) <br> *Column  1,  line 60 to column 2, line 58; figures* | 1,3-6 | |
| A | US-A-3 866 751   (D.C.HOLERT) <br> *Column 4, lines 12-55; column 3, lines 56-59; figures* | 1,3-5 | |
| A | FR-A-2 343 311   (GILLIBERT) <br><br> *Page  5, line 19 to page 7, line 6; figures* | 1-3,6 8 | TECHNICAL FIELDS SEARCHED (Int. Cl. 3) <br><br> G 11 B <br> B 42 D |
| A | US-A-4 003 468   (J.L.BERKMAN) <br><br> *Columns 3,4; figures* | 1-4,7- 11 | |
| A | GB-A-2 003 118   (POLYGRAM) | 1,10 | |
| A | FR-A-2 239 186   (POLYGRAM) | 1 | |
| | ---        -/- | | |

The present search report has been drawn up for all claims

| Place of search <br> THE HAGUE | Date of completion of the search <br> 21-03-1983 | Examiner <br> DECLAT M.G. |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO Form 1503. 03.82

## European Patent Office

**EUROPEAN SEARCH REPORT**

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl. 3) |
| A | GB-A-2 067 975 (L.J.SAUNDERS)<br><br>----- | 1 | |
| | | | **TECHNICAL FIELDS SEARCHED (Int. Cl. 3)** |

The present search report has been drawn up for all claims

| Place of search<br>THE HAGUE | Date of completion of the search<br>21-03-1983 | Examiner<br>DECLAT M.G. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82